# EUROPÄISCHE PATENTSCHRIFT

(11) **EP 1 688 299 B1**
(45) Veröffentlichungstag und Bekanntmachung des Hinweises auf die Patenterteilung: **10.10.2007**
(21) Anmeldenummer: 06090021.4
(22) Anmeldetag: 01.02.2006
(51) Int. Cl.: B60N 2/68

(54) **Fondlehnenrahmen für ein Fondlehnenteil eines Fahrzeugsitzes und Verfahren zu dessen Herstellung**
Back rest frame for a part of a back rest of a car seat and a method of manufacturing the same
Bati du dossier pour une partie du dossier d'un siege de vehicule et son procédé de fabrication

(30) Priorität: 04.02.2005 DE 102005005485
(43) Veröffentlichungstag der Anmeldung: 09.08.2006
(73) Patentinhaber: Faurecia Autositze GmbH, 31655 Stadthagen (DE)
(72) Erfinder: Behrens, Meinhard, 31683 Obernkirchen (DE)
(74) Vertreter: Bremer, Ulrich

(56) Entgegenhaltungen:
- WO-A-01/89875
- WO-A-99/19164
- DE-U1-0202004 019 56
- US-A1- 2004 227 389
- PATENT ABSTRACTS OF JAPAN Bd. 2000, Nr. 13, 5. Februar 2001 (2001-02-05) -& JP 2000 270961 A (NHK SPRING CO LTD), 3. Oktober 2000 (2000-10-03)

## Beschreibung

Die Erfindung betrifft einen Fondlehnenrahmen gemäß dem Oberbegriff von Anspruch 1.

Ein derartiger Fondlehnenrahmen ist aus der WO 01/89875 A1 bekannt. Er weist mehrere Lehnenrahmenteile auf, die jeweils modulweise aus Sondermodulen und Standardmodulen aufgebaut sind. Die Eckbereiche jedes Lehnenrahmenteils werden durch Sondermodule gebildet, zwischen denen in vertikaler Richtung Standardmodule, gegebenenfalls kombiniert mit Sondermodulen, und in horizontaler Richtung Standardmodule eingesetzt sind. Für die Ausbildung eines breiteren Lehnenrahmenteils ist ergänzend eine vertikal verlaufende mittlere Stützte vorgesehen, an die zu beiden Seiten in Querrichtung verlaufende Standardmodule angesetzt werden.

Die US 6,260,924 B1 beschreibt ein modulares Rückbanksystem mit zwei Lehnenrahmenteilen, bei denen jeweils die Rückenplatte und das obere Hutprofil bzw. der obere Querträger einteilig ausgebildet sind. An den Seiten werden ergänzend vertikal verlaufende Bleche angebracht.

Die DE 101 42 981 A1 beschreibt einen Lehnenpolsterträger für einen Fahrzeugsitz mit einem Grundblech und einem teilweise umlaufenden Verstärkungsrahmen, der modular aufgebaut ist. Der im Wesentlichen U-förmige, nach unten offene Verstärkungsrahmen ist hierbei mit Solltrennstellen versehen, an denen er geteilt und in anderer Anordnung wieder zusammengefügt werden kann. Als abzutrennender Teil sind untere Bereiche der äußeren vertikalen Schenkel vorgesehen. Für einen breiteren Lehnenrahmenteil können ergänzend ein unterer Querholm und zwischen dem unteren Querholm und dem oberen horizontalem Schenkel ein vertikaler Mittelholm als Verstärkungselemente angebracht werden.

Derartige Modulsysteme ermöglichen bereits eine kostengünstige Fertigung, da die für die jeweiligen Sitze bzw. Sitztypen erforderlichen Lehnenrahmen aus vorgegebenen Modulen, gegebenenfalls durch Zurechtschneiden, zusammengesetzt werden können.

Die bekannten Modulsysteme erfordern jedoch immer noch recht aufwendig herzustellende einzelne Module, zum Teil mit Eckbereichen in komplexer Formgebung. Auch ist die Variantenvielfalt von ausbildbaren Lehnenrahmenteilen begrenzt; insbesondere ist oftmals nur eine einzige Unterteilung der Rücksitzbank möglich.

Weiterhin erfordert die Befestigung des Polsters und/oder des Bezuges weitere Aufnahmeeinrichtungen, die zusätzlich auszubilden oder anzubringen sind. Somit sind zum Teil recht komplexe Formgebungen und hierfür jeweils individuell herzustellende Werkzeuge erforderlich, da die Lehnenteilbreite - die insbesondere bei asymmetrischer Unterteilung der Rücksitzbank bzw. bei verschiedenen Fahrzeugtypen - variiert.

Der Erfindung liegt die Aufgabe zugrunde, einen Fondlehnenrahmen zu schaffen, der eine hohe Variantenvielfalt ermöglicht, eine sichere Aufnahme des Lehnenpolsters und/oder Bezuges gewährleistet und kostengünstig, flexibel und mit geringem Aufwand herstellbar ist.

Diese Aufgabe wird durch einen Fondlehnenrahmen nach Anspruch 1 gelöst. Die Unteransprüche beschreiben bevorzugte Weiterbildungen.

Der erfindungsgemäße Fondlehnenrahmen ermöglicht ohne zusätzlichen Werkzeugaufwand eine individuelle Anpassung an verschiedene Fondlehnenteile. Je nach der erforderlichen Lehnenteilbreite kann ein Standard-Grundblech in seiner Ausgangsbreite belassen oder entsprechend seitlich gekürzt werden, wozu lediglich ein einziger Schnitt erforderlich ist. Auf das gegebenenfalls zurechtgeschnittene Grundblech werden nachfolgend - direkt oder nach geeigneter Formgebung des Grundblechs - die vier eine feste Struktur gewährleistenden Hutprofile aufgeschweißt, von denen lediglich das obere und untere Hutprofil in ihrer Länge anzupassen sind. Zumindest die seitlichen Polsterkanäle sind hierbei bereits in den Hutprofilen ausgebildet.

Erfindungsgemäß können der obere und untere Polsterkanal an der Ober- und Unterseite des - gegebenenfalls zurechtgeschnittenen - Grundblechs in einem einheitliches Standard-Werkzeug ausgebildet, z.B. gestanzt werden, wozu das Grundblech mit seiner variablen Breite ohne weitere Vorbearbeitung in das Standard-Werkzeug eingelegt wird. Bei dieser Ausführungsform unterscheiden sich die in Querrichtung verlaufenden, z.B. lediglich als Rechteckprofile ausgebildeten Hutprofile von den mit Polsterkanälen versehenen, seitlichen Hutprofilen. Die beiden seitlichen und die beiden in Querrichtung verlaufenden Hutprofile sind jedoch paarweise gleich, so dass geringe Herstellungskosten erreicht werden können. Die Hutprofile können bei allen Ausführungsformen aus einem einheitlichen Halbzeug, z.B. einem Strangpressprofil oder Rollprofil, hergestellt werden.

Alternativ hierzu können auch der obere und untere Polsterkanal bereits in dem oberen und unteren Hutprofil ausgebildet sein, so dass ein jeweils entsprechend zu kürzendes Standard-Hutprofil für alle vier gleichen Hutprofile verwendet und auf die z.B. plane Grundplatte aufgeschweißt werden kann.

Die Kopfstützenstangen können in in dem oberen Hutprofil ausgebildete Aufnahmen eingesetzt werden. Auch weitere Einrichtungen, z.B. Gurtaufnahmen, können entsprechend an dem Lehnenrahmen angebracht werden.

Die Befestigung der vier Hutprofile aneinander erfolgt vorteilhafterweise durch Auflegen der flachen Oberseiten des oberen und unteren Hutprofils auf die seitlichen Hutprofile und anschließende Punktverschweißung.

Erfindungsgemäß wird insbesondere bei Ausbildung des oberen und unteren Polsterkanals in der Grundplatte eine gleichmäßige Aufnahme einer Profilleiste mit dem Bezug bzw. Polster über den gesamten Umfang gewährleistet.

Die Erfindung wird im Folgenden anhand der beiliegenden Zeichnungen an einigen Ausführungsformen näher erläutert. Es zeigen:
- Fig. 1: eine Vorderansicht eines erfindungsgemäßen Fondlehnenrahmens für ein breites Fondlehnenteil;
- Fig. 2: eine Vorderansicht eines Fondlehnenrahmens für ein schmales Fondlehnenteil;
- Fig. 3: den Schnitt A-A aus Fig. 1;
- Fig. 4: den Schnitt B-B aus Fig. 1.

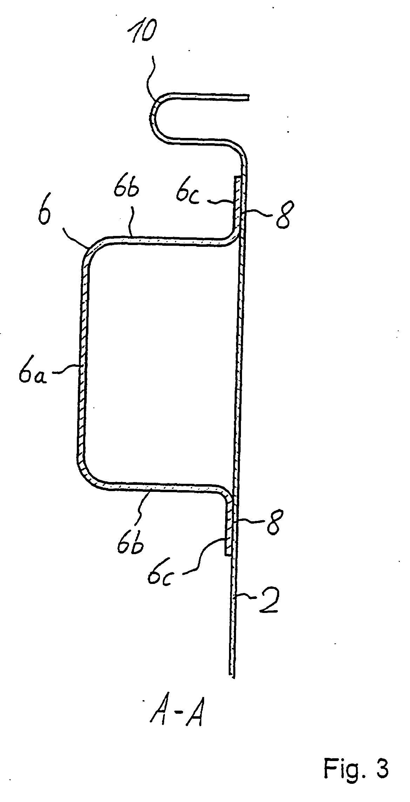

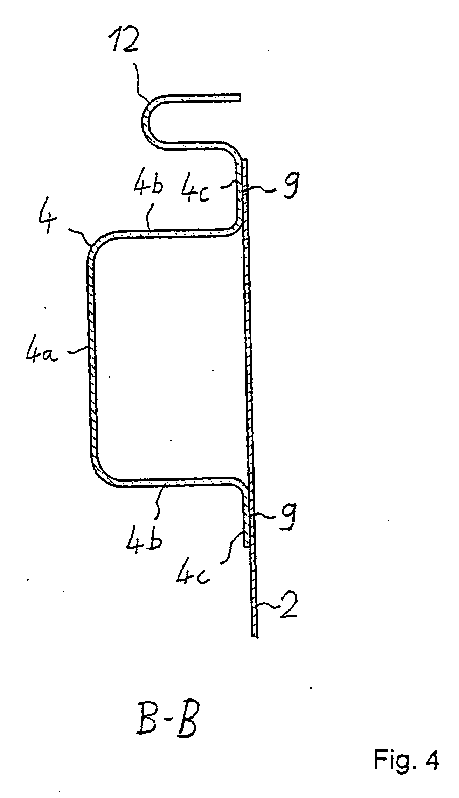

Ein Fondlehnenrahmen 1 für ein Fondlehnenteil eines Fahrzeugsitzes weist eine Grundplatte 2, ein (in Fahrtrichtung) linkes, seitliches Hutprofil 4, ein rechtes, seitliches Hutprofil 5, ein oberes Hutprofil 6 und ein unteres Hutprofil 7 auf. Die Hutprofile 4, 5, 6, 7 sind gemäß Fig. 3, 4 nur jeweils in Schweißverbindungen 8, 9 auf die Grundplatte 2 geschweißt und bilden eine äußere, rechteckige Trägerstruktur, in die das Polster bzw. der Schaumstoffkörper der Rückenlehne von vorne eingelegt werden kann.

Gemäß dem Schnitt der Fig. 3 weisen die Hutprofile 6, 7 (die Darstellung ist entsprechend auch auf das Hutprofil 7 zu übertragen) vorzugsweise jeweils eine rechtwinklige bzw. halboffene Form auf mit einer Oberseite 6a, 7a, von dieser rechtwinklig abgehenden Flanken 6b, 7b und Auflageflächen 6c, 7c bzw. Flanschen, die auf die Grundplatte 2 gelegt sind. Am oberen äußeren Ende und unteren äußeren Ende der Grundplatte 2 ist jeweils ein in Querrichtung verlaufender Polsterkanal 10, 11 bzw. Trimmkanal als nach hinten offene Umbiegung ausgebildet, unterhalb bzw. oberhalb von dem die Hutprofile 6, 7 positioniert sind.

Gemäß dem Schnitt B-B der Fig. 4 des linken Hutprofils 4 (die Darstellung ist entsprechend auch auf das rechte Hutprofil 5 zu übertragen) sind die vertikal verlaufenden seitlichen Hutprofile 4, 5 mit einer Oberseite 4a, 5a, Flanken 4b, 5b, Auflageflächen 4c, 5c und weiterhin einem nach hinten offen ausgebildeten Polsterkanal 12, 13 ausgebildet, mit dem die seitlichen Hutprofile 4, 5 etwas über die Grundplatte 2 hinausragen. An den Enden der in Querrichtung verlaufenden Hutprofile 6, 7 sind deren Oberseiten 6a, 7a verlängert, auf die seitlichen Hutprofile 4, 5 gelegt und auf diesen mittels z. B. Punktschweißungen 15 befestigt, so dass eine steife Tragstruktur aus den Hutprofilen 4, 5, 6, und 7 gebildet ist.

Die Grundplatte 2 ist somit als Blech mit an ihrem oberen und unteren Ende ausgebildeten Polsterkanälen 10, 11 bzw. Trimmkanälen und unbearbeiteten Seitenrändern ausgebildet. Die seitlichen Hutprofile 4, 5 sind identisch ausgebildet und entsprechen zueinander revers angebracht; entsprechend auch das obere und untere Hutprofil 6, 7. In dem oberen Hutprofil 6 sind vorteilhafterweise zwei vertikal verlaufende, parallele Kopfstützenaufnahmen 14 ausgebildet, in die von oben Kopfstützenstangen einer Kopfstütze eingesetzt werden. Hierzu können entsprechend in den Flanken 6b Löcher gebohrt oder gestanzt werden.

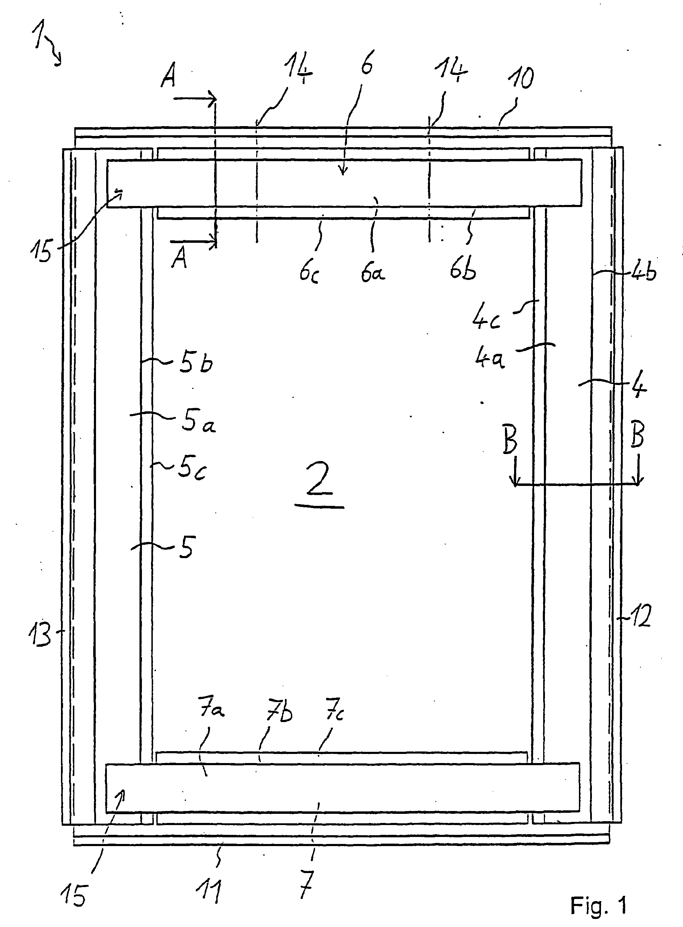

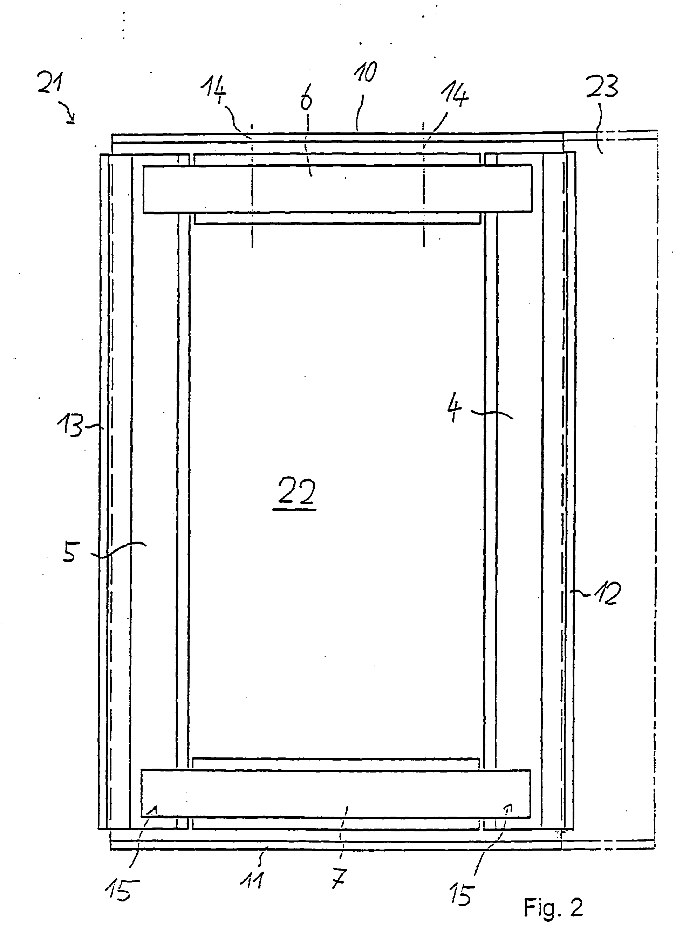

Fig. 2 zeigt einen schmaleren Fondlehnenrahmen 21, der bei gleicher Höhe und ansonsten gleicher Strukturierung eine geringere Breite als der breite Fondlehnenrahmen 1 der Fig. 1 aufweist. Zu seiner Herstellung werden von dem (unbearbeiteten) Ausgangsblech der Grundplatte 2 der Fig. 1 zunächst an einer Seite ein Zuschnittbereich 23 - durch einen einzigen Schnitt - abgetrennt und nachfolgend die Polsterkanäle 10, 11 durch z.B. Stanzen ausgebildet, wozu das gleiche Werkzeug wie bei der Grundplatte 2 der Fig. 1 verwendet werden kann. Weiterhin werden auch das obere und untere Hutprofil 6, 7 auf die passende Länge zurechtgeschnitten, so dass nachfolgend der Fondlehnenrahmen 21 mit schmalerer Grundplatte 22, unveränderten seitlichen Hutprofilen 4, 5 und schmaleren Hutprofilen 6, 7 wie oben beschrieben zusammengeschweißt werden kann.

Grundsätzlich ist auch eine Ausbildung aller Hutprofile 4, 5, 6, 7 mit dem Profil gemäß dem Schnitt B-B der Fig. 4 möglich, so dass der obere und der untere Polsterkanal 10, 11 in den Hutprofilen 6, 7 ausgebildet sind. Das Grundblech 2, 22 ist somit plan ausgebildet; die Hutprofile 4, 5, 6, 7 sind vorzugsweise aus einem gleichen Halbzeug hergestellt; hierbei können gegebenenfalls in den Ecken des Fondlehnenrahmens 1, 21 Bereiche ohne Polsterkanäle 10, 11 vorliegen, so dass - anders als in Fig. 1,2 - kein durchgängig umlaufender Trimmkanal ausgebildet ist.

## Patentansprüche

1. Fondlehnenrahmen für ein Fondlehnenteil eines Fahrzeugsitzes, mit mindestens
einer Grundplatte (2, 22),
einem linken und einem rechten, vertikal verlaufenden, seitlichen Hutprofil (4, 5),
einem oberen und einem unteren, in Querrichtung verlaufenden Hutprofil (6, 7),
wobei die Hutprofile (4, 5, 6, 7) auf die Vorderseite der Grundplatte (2, 22) aufgeschweißt sind, und
wobei der Fondlehnenrahmen (1, 21) an seinen seitlichen Rändern und seinem oberen und unteren Rand Polsterkanäle (10, 11, 12, 13) zur Befestigung eines Polsters und/oder Bezuges aufweist,
wobei die Hutprofile (4, 5, 6, 7) geradlinig ausgebildet sind,
**dadurch gekennzeichnet, dass**
die seitlichen Hutprofile (4, 5) mit den in Querrichtung verlaufenden Hutprofilen (6, 7) verschweißt sind, und
die seitlichen Polsterkanäle (12, 13) an den seitlichen Hutprofilen (4, 5) ausgebildet sind.

2. Fondlehnenrahmen nach Anspruch 1, **dadurch gekennzeichnet, dass** das linke und das rechte Hutprofil (4, 5) einen gleichen Querschnitt aufweisen.

3. Fondlehnenrahmen nach Anspruch 2, **dadurch gekennzeichnet, dass** das linke Hutprofil (5) und das rechte Hutprofil (4) gleich ausgebildet und zueinander in reverser Anordnung auf der Grundplatte (2) befestigt sind.

4. Fondlehnenrahmen nach einem der vorherigen Ansprüche, **dadurch gekennzeichnet, dass** das obere und das untere Hutprofil (6, 7) einen gleichen Querschnitt aufweisen.

5. Fondlehnenrahmen nach Anspruch 4, **dadurch gekennzeichnet, dass** das obere Hutprofil (6) und das untere Hutprofil (7) gleich ausgebildet sind.

6. Fondlehnenrahmen nach einem der vorherigen Ansprüche, **dadurch gekennzeichnet, dass** die Hutprofile (4, 5, 6, 7) jeweils einen rechteckigen Querschnitt mit einer Oberseite (4a, 5a, 6a, 7a) und an dieser angrenzende, zur Grundplatte (2) führende Flanken (4b, 5b, 6b, 7b) aufweisen.

7. Fondlehnenrahmen nach Anspruch 6, **dadurch gekennzeichnet, dass** das obere und untere Hutprofil (6, 7) zwischen die seitlichen Hutprofile (4, 5) gesetzt sind, ihre Oberseiten (6a, 7a) an ihren Enden vorragen und auf die Oberseiten (4a, 5a) der seitlichen Hutprofile (4, 5) gelegt und angeschweißt sind.

8. Fondlehnenrahmen nach einem der vorherigen Ansprüche, **dadurch gekennzeichnet, dass** der obere und untere Polsterkanal (10, 11) in der Grundplatte (2) ausgebildet sind.

9. Fondlehnenrahmen nach Anspruch 8, **dadurch gekennzeichnet, dass** die vier Polsterkanäle (10, 11, 12, 13) einen durchgängig umlaufenden Kanal bilden.

10. Fondlehnenrahmen nach einem der Ansprüche 1 bis 7, **dadurch gekennzeichnet, dass** der obere und der untere Polsterkanal (10, 11) in dem oberen und unteren Hutprofil (6, 7) ausgebildet sind.

11. Fondlehnenrahmen nach Anspruch 10, **dadurch gekennzeichnet, dass** das obere, untere, rechte und linke Hutprofil (4, 5, 6, 7) mit gleichem Querschnitt ausgebildet sind.

12. Fondlehnenrahmen nach einem der vorherigen Ansprüche, **dadurch gekennzeichnet, dass** an dem oberen Hutprofil (6) Aufnahmen (14) für Kopfstützenstangen ausgebildet sind.

## Claims

1. Rear backrest frame for a rear backrest part of a vehicle seat, with at least
one base plate (2, 22),
a left and a right, vertically extending, lateral hat profile (4, 5),
an upper and a lower hat profile (6, 7) extending in the transverse direction,
wherein the hat profiles (4, 5, 6, 7) are welded to the front side of the base plate (2, 22), and
wherein the rear backrest frame (1, 21) comprises cushion channels (10, 11, 12, 13) at its lateral edges and its upper and lower edge for fastening a cushion and/or cover,
wherein the hat profiles (4, 5, 6, 7) are of rectilinear formation,
**characterised in that**
the lateral hat profiles (4, 5) are welded to the hat profiles (6, 7) extending in the transverse direction, and
the lateral cushion channels (12, 13) are formed at the lateral hat profiles (4, 5).

2. Rear backrest frame according to Claim 1, **characterised in that** the left and the right hat profiles (4, 5) have the same cross section.

3. Rear backrest frame according to Claim 2, **characterised in that** the left hat profile (5) and the right hat profile (4) are of the same formation and are fastened to one another in a reverse arrangement on the base plate (2).

4. Rear backrest frame according to any one of the preceding Claims, **characterised in that** the upper and the lower hat profiles (6, 7) have the same cross section.

5. Rear backrest frame according to Claim 4, **characterised in that** the upper hat profile (6) and the lower hat profiles (7) are of the same formation.

6. Rear backrest frame according to any one of the preceding Claims, **characterised in that** the hat profiles (4, 5, 6, 7) in each case have a rectangular cross section with a top side (4a, 5a, 6a, 7a) and, adjacent to the latter, flanks (4b, 5b, 6b, 7b) which lead to the base plate (2).

7. Rear backrest frame according to Claim 6, **characterised in that** the upper and lower hat profiles (6, 7) are positioned between the lateral hat profiles (4, 5), their top sides (6a, 7a) project at their ends and are placed on the top sides (4a, 5a) of the lateral hat profiles (4, 5) and welded thereto.

8. Rear backrest frame according to any one of the preceding Claims, **characterised in that** the upper and lower cushion channels (10, 11) are formed in the base plate (2).

9. Rear backrest frame according to Claim 8, **characterised in that** the four cushion channels (10, 11, 12, 13) form one channel extending continuously all round.

10. Rear backrest frame according to any one of Claims 1 to 7, **characterised in that** the upper and the lower cushion channels (10, 11) are formed in the upper and lower hat profiles (6, 7).

11. Rear backrest frame according to Claim 10, **characterised in that** the upper, lower, right and left hat profiles (4, 5, 6, 7) are formed with the same cross section.

12. Rear backrest frame according to any one of the preceding Claims, **characterised in that** receptacles (14) for headrest rods are formed at the upper hat profile (6).

## Revendications

1. Châssis de dossier arrière pour un élément de dossier arrière d'un siège de véhicule avec au moins une plaque de base (2, 22), un profilé chape (4, 5) latéral vertical du côté gauche et un autre du côté droit, un profilé chape (6, 7) transversal supérieur et un autre transversal inférieur, les profilés chapes (4, 5, 6, 7) étant soudés sur le devant de la plaque de base (2, 22), et le châssis de dossier arrière (1, 21) présentant sur ses bords latéraux, son bord inférieur et son bord supérieur des passages rembourrés (10, 11, 12, 13) pour y fixer un rembourrage et/ou un revêtement, les profilés chapes (4, 5, 6, 7) étant conformés de manière rectiligne, **caractérisé en ce que** les profilés chapes latéraux (4, 5) sont soudés aux profilés chapes transversaux (6, 7) et **en ce que** les passages rembourrés latéraux (12, 13) sont situés contre les profilés chapes latéraux (4, 5).

2. Châssis de dossier arrière selon la revendication 1, **caractérisé en ce que** le profilé chape gauche et le profilé chape droit (4, 5) présentent la même section transversale.

3. Châssis de dossier arrière selon la revendication 2, **caractérisé en ce que** le profilé chape gauche (5) et le profilé chape droit (4) sont conformés de la même manière et fixés sur la plaque de base (2) dans une disposition inverse l'un par rapport à l'autre.

4. Châssis de dossier arrière selon l'une des revendications précédentes, **caractérisé en ce que** le profilé chape supérieur et le profilé chape inférieur (6, 7) présentent la même section transversale.

5. Châssis de dossier arrière selon la revendication 4, **caractérisé en ce que** le profilé chape supérieur (6) et le profilé chape inférieur (7) sont conformés de la même manière.

6. Châssis de dossier arrière selon l'une des revendications précédentes, **caractérisé en ce que** les profilés chapes (4, 5, 6, 7) présentent chacun une section transversale rectangulaire avec une face supérieure (4a, 5a, 6a, 7a) et, contigus à celle-ci, des flancs (4b, 5b, 6b, 7b) rejoignant la plaque de base (2).

7. Châssis de dossier arrière selon la revendication 6, **caractérisé en ce que** le profilé chape supérieur et le profilé chape inférieur (6, 7) sont placés entre les profilés chapes latéraux (4, 5), **en ce que** leurs faces supérieures (6a, 7a) dépassent à leurs extrémités, sont placées contre les faces supérieures (4a, 5a) des profilés chapes latéraux (4, 5) et soudées à elles.

8. Châssis de dossier arrière selon l'une des revendications précédentes, **caractérisé en ce que** le passage rembourré supérieur et le passage rembourré inférieur (10, 11) sont situés dans la plaque de base (2).

9. Châssis de dossier arrière selon la revendication 8, **caractérisé en ce que** les quatre passages rembourrés (10, 11, 12, 13) forment un passage périphérique continu.

10. Châssis de dossier arrière selon l'une des revendications 1 à 7, **caractérisé en ce que** le passage rembourré supérieur et le passage rembourré inférieur (10, 11) sont situés dans le profilé chape supérieur et le profilé chape inférieur (6, 7).

11. Châssis de dossier arrière selon la revendication 10, **caractérisé en ce que** les profilés chape supérieur, inférieur, droit et gauche (4, 5, 6, 7) sont conformés avec la même section transversale.

12. Châssis de dossier arrière selon l'une des revendications précédentes, **caractérisé en ce que** le profilé chape supérieur (6) présente des logements (14) pour tiges d'appuie-tête.
